# EUROPÄISCHE PATENTSCHRIFT

(11) **EP 0 606 045 B1**
(45) Veröffentlichungstag und Bekanntmachung des Hinweises auf die Patenterteilung: **23.10.1996**
(21) Anmeldenummer: 93810858.6
(22) Anmeldetag: 08.12.1993
(51) Int. Cl.: B26D 1/08

(54) **Schneidmaschine**
Cutting machine
Machine de coupe

(30) Priorität: 04.01.1993 CH 9/93
(43) Veröffentlichungstag der Anmeldung: 13.07.1994
(73) Patentinhaber: INGENIEURBÜRO WILLI SCHNEIDER, CH-7460 Savognin (CH)
(72) Erfinder: Schneider, Willi, CH-8606 Greifensee (CH)
(74) Vertreter: Ryffel, Rolf

(56) Entgegenhaltungen:
- EP-A- 0 416 354
- DE-C- 213 684
- DE-C- 284 052
- FR-A- 2 096 147
- GB-A- 566 754
- US-A- 2 325 030
- US-A- 2 667 922
- US-A- 3 890 015
- US-A- 4 936 177
- DATABASE WPI Section PQ, Week 8828, 16. Juni 1988 Derwent Publications Ltd., London, GB; Class P54, AN 88-196846 & SU-A-1 360 918 (CHEM PETRO EQP TECH) 23. Dezember 1987

## Beschreibung

Die Erfindung bezieht sich auf eine Schneidmaschine mit einem Maschinengestell, das eine Auflagetischplatte trägt, und mit einem Messerträger, welcher an dem Maschinengestell derart geführt ist, dass ein am Messerträger befestigtes Messer bezüglich der Auflagetischplatte zwischen einer oberen Endlage, in der die Schneidkante des Messers in einem Winkel zur Auflagetischplatte verläuft, und einer unteren Endlage, in der die Schneidkante parallel zur Auflagetischplatte verläuft, bewegbar ist und dabei gleichzeitig in seiner Längsrichtung verschiebbar ist, wobei der Messerträger an zwei Stellen, im Bereich seiner seitlichen Enden, mit geradlinigen Führungseinrichtungen, die bezüglich der Auflagetischplatte unterschiedlich geneigt sind, geführt ist, und der Messerträger gegen Verschiebung in einer zur Schneidkante senkrechten und zur Auflagetischplatte parallelen Richtung gehalten ist.

Solche Schneidmaschinen, insbesondere Papierschneidmaschinen, sind seit langem bekannt. Die besondere Bewegung des Messerträgers beim Schneiden, mit der das Messer nicht nur auf die Auflagetischplatte gesenkt wird, sondern gleichzeitig auch bezüglich der Auflagetischplatte verschwenkt wird und in der Längsrichtung des Messers über die Auflagetischplatte gezogen wird, üblicherweise als Schwingschnitt bezeichnet, hat sich im Interesse hoher Genauigkeit und geringer Messerabnutzung bewährt. In den bekannten Maschinen, zum Beispiel gemäss dem Dokument GB-A-566 754, wird die Form der Bewegung mit zwei am Messerträger angebrachten Nutensteinen (Gleitsteinen) erzeugt, die in gestellfesten, bezüglich der Auflagetischplatte geneigten Nuten geführt sind, welche beim Heben und Senken des Messerträgers die Verschiebung des Messers in seiner Längsrichtung bewirken. Die beiden Nuten sind bezüglich der Auflagetischplatte unterschiedlich geneigt, damit das Messer beim Reben und Senken gleichzeitig auch wie angegeben verschwenkt wird. Die beiden Nutensteine in den Nuten müssen geschmiert sein. Natürlich, muss der Messerträger auch für Bewegungen in einer die Schneidkante des Messers enthaltenden, zur Auflagetischplatte senkrechten Ebene geführt sein, die Schneidkante soll sich nicht aus dieser Ebene heraus bewegen. Zu diesem Zweck ist der Messerträger in der Regel bei seinen seitlichen Enden in Gleitführungen geführt, die die Randabschnitte des Messerträgers zwischen ebenen Führungsflächen aufnehmen. Auch diese Führungsflächen müssen geschmiert oder (bei Verwendung von Kunststoff) geölt sein.

In Papierschneidmaschinen ist jede Verwendung von Schmierstoffen (Fett, Oel) unerwünscht, da diese mit dem Papier in Berührung kommen können und dann das Papier verschmutzen.

Die Erfindung hat sich daher die Aufgabe gestellt, die eingangs angegebene Schneidmaschine so auszubilden, dass zumindest im Bereich des Messers und des Messerträgers keine Schmierung erforderlich ist.

Die erfindungsgemässe Schneidmaschine, mit der die Aufgabe gelöst wird, weist die in Oberbegriff des Anspruchs 1 angegebenen Merkmale auf und ist dadurch gekennzeichnet, dass die geradlinigen Führungseinrichtungen Linearführungen sind, von denen jeweils eines der beiden bezüglich einander verschiebbaren Elemente über ein Wälzlager mit dem Messerträger oder mit dem Maschinengestell schwenkbar verbunden ist und die den Messerträger gegen Verschiebung in der zur Schneidkante senkrechten und zur Auflagetischplatte parallelen Richtung halten, und dass der Messerträger ferner an wenigstens einer dritten Stelle mit einer Führungseinrichtung, die wenigstens eine dritte Linearführung enthält, geführt und gegen Kippbewegungen um eine durch die beiden erstgenannten Stellen gehende Achse gehalten ist.

Die in Nuten geführten Gleitsteine, die in den eingangs geschilderten bekannten Schneidmaschinen verwendet wurden, sind zunächst also in der erfindungsgemässen Schneidmaschine durch Linearführungen ersetzt. Linearführungen, die praktisch spielfrei sind, z.B. mit bezüglich einander geneigten Reihen von vorgespannten Rollen, sind im Handel erhältlich. Damit der Messerträger auch seine Schwenkbewegung ausführen kann, ist jeweils eines der beiden Elemente jeder dieser Linearführungen mit dem Messerträger oder mit dem Maschinengestell über ein Wälzlager verbunden. Auch Wälzlager, z.B. vorgespannte Kegelrollenlager, die praktisch spielfrei sind, sind im Handel erhältlich. Mit solchen Lagern ist der Messerträger dann an zwei Stellen gegen Verschiebung in einer zur Schneidkante senkrechten und zur Auflagetischplatte parallelen Richtung gehalten. Dadurch ist schon eine erste Voraussetzung gegeben für die Eliminierung auch der in den bekannten Schneidmaschinen verwendeten Gleitführungen für die Randabschnitte des Messerträgers. Als zweite Voraussetzung ist es nur noch erforderlich, Kippbewegungen des Messerträgers um eine durch die beiden genannten Stellen gehende Achse zu verhindern. Diesem Zweck dient die an der dritten Stelle angeordnete Führungseinrichtung, die wenigstens eine dritte Linearführung enthält.

Ausführungsbeispiele der Erfindung werden nachstehend anhand der Zeichnungen näher erläutert. Darin zeigen:
Fig. 1 eine schematische Seitenansicht einer Schneidmaschine,
Fig. 2 eine Stirnansicht von rechts in Fig. 1 gesehen,
Fig. 3 eine gleiche Stirnansicht wie Fig. 2 bei anderer Stellung des Messerträgers und
Fig. 4 in einer ähnlichen Stirnansicht wie Fig. 2 eine abgewandelte Ausführungsform der Schneidmaschine.

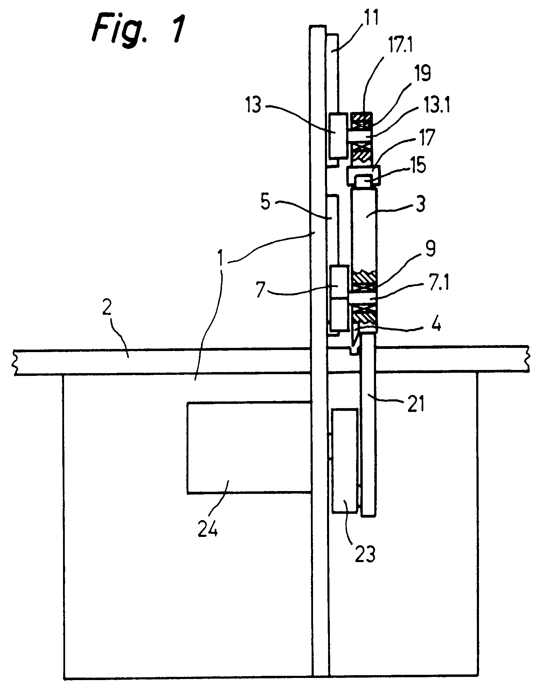

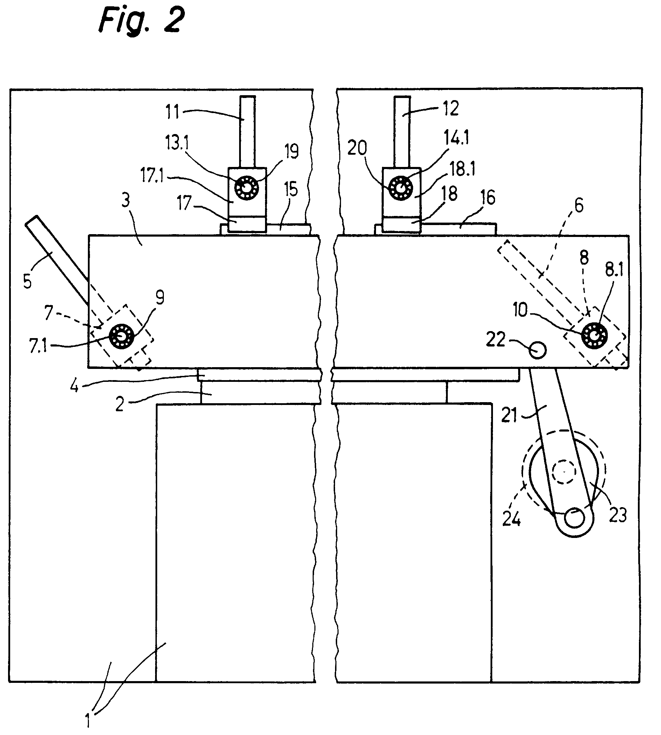

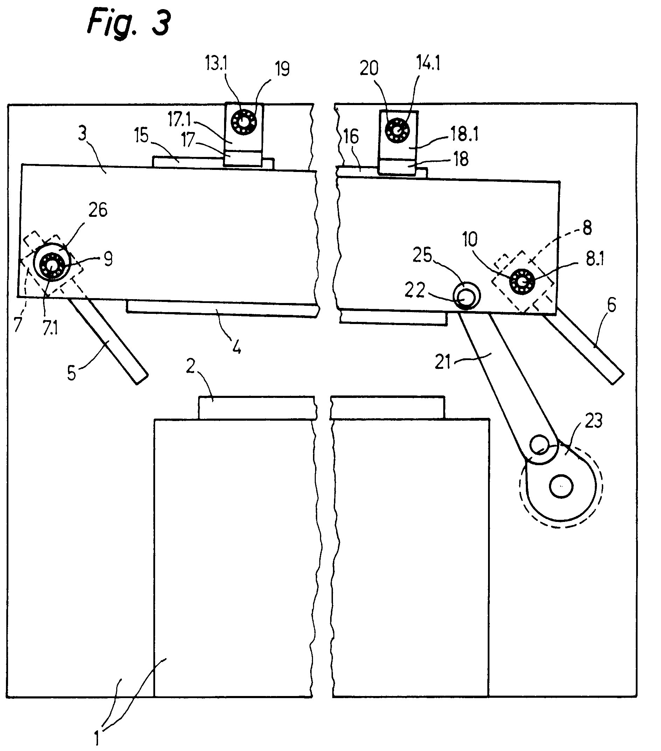

Die dargestellte Schneidmaschine besitzt ein Maschinengestell 1, das eine Auflagetischplatte 2 trägt, und einen bezüglich des Maschinengestells 1 bewegbaren Messerträger 3, an welchem ein Messer 4 befestigt ist. Der Messerträger 3 ist am Maschinengestell 1 derart geführt, dass das Messer 4 bezüglich der Auflagetischplatte 2 zwischen der in Fig. 3 gezeigten oberen Endlage und der in Fig. 1 und 2 gezeigten unteren Endlage bewegbar ist. In der oberen Endlage gemäss Fig. 3 verläuft die Schneidkante des Messers 4 in einem Winkel zur Auflagetischplatte 2, während in der unteren Endlage gemäss Fig. 1 und 2 die Schneidkante parallel zur Auflagetischplatte 2 verläuft. Bei der Bewegung zwischen der oberen und der unteren Endlage wird das Messer 4 gleichzeitig auch in seiner Längsrichtung verschoben. Das Messer 4 führt also einen sogenannten Schwingschnitt aus.

Damit sich das Messer 4 in der beschriebenen Weise bewegt, ist der Messerträger 3 an zwei Stellen, im Bereich seiner seitlichen Enden, mit Linearführungen geführt, die bezüglich der Auflagetischplatte 2 unterschiedlich geneigt sind. Die an sich bekannten, im Handel erhältlichen Linearführungen bestehen jeweils aus zwei bezüglich einander verschiebbaren Elementen, nämlich einer Führungsschiene 5 bzw. 6 und einem Schiebekörper 7 bzw. 8, der auf der Führungsschiene verschiebbar geführt ist, in der Regel mit gegeneinander geneigten Reihen von vorgespannten Rollen. Im dargestellten Ausführungsbeispiel der Erfindung sind die Führungsschienen 5 und 6 am Maschinengestell 1 befestigt, während die Schiebekörper 7 und 8 jeweils einen Zapfen 7.1 bzw. 8.1 tragen, der über ein vorgespanntes Kegelrollenlager 9 bzw. 10 im Messerträger 3 gelagert ist. Die Linearführungen 5,7 und 6,8 erzwingen bei der Hubbewegung des Messerträgers 3 die Verschiebung in der Längsrichtung des Messers 4 und die Verschwenkung des Messerträgers. Damit diese Verschwenkung möglich ist, ist der Messerträger 3 wie beschrieben über die Lager 9 und 10 schwenkbar mit den Schiebekörpern 7 und 8 verbunden. Natürlich wäre es aber auch möglich, die Schiebekörper 7 und 8 starr mit dem Messerträger 3 zu verbinden und dafür jeweils das andere Element jeder Linearführung 5,7 und 6,8, d.h. die Führungsschienen 5 und 6, über Kegelrollenlager schwenkbar mit dem Maschinengestell 1 zu verbinden.

An den Stellen, wo die Kegelrollenlager 9 und 10 angeordnet sind, ist der Messerträger 3 durch diese Lager 9 und 10 in Verbindung mit den Linearführungen 5,7 und 6,8 auch gegen Verschiebung in einer zur Schneidkante des Messers 4 senkrechten und zur Auflagetischplatte 2 parallelen horizontalen Richtung gehalten. Um dazu auch noch allenfalls mögliche kleine Kippbewegungen des Messerträgers 3 um eine durch die beiden genannten Stellen gehende Achse zu verhindern, genügt es, wenn der Messerträger 3 noch an wenigstens einer dritten Stelle, vorzugsweise im Bereich des oberen Randes des Messerträgers, mit einer Führungseinrichtung geführt ist, die wenigstens eine dritte Linearführung enthält. Bei relativ langen Messern 4 und Messerträgern 3 können auch zwei oder mehr solche Führungseinrichtungen im Bereich des oberen Randes des Messerträgers 3 angeordnet sein. In Fig. 2 und 3 sind zwei Führungseinrichtungen dargestellt, die jeweils eine Linearführung mit einer am Maschinengestell 1 befestigten Führungsschiene 11 bzw. 12 und einem auf der Führungsschiene verschiebbaren Schiebekörper 13 (Fig. 1) enthalten. Mit jeder dieser Linearführungen ist jeweils eine weitere Linearführung kombiniert, um eine Kreuzschlittenanordnung zu bilden. Die weitere Linearführung enthält jeweils eine auf dem oberen Rand des Messerträgers 3 befestigte Führungsschiene 15 bzw. 16 und einen auf der Führungsschiene verschiebbaren Schiebekörper 17 bzw. 18. Damit der Messerträger 3 die beschriebene Schwenkbewegung ausführen kann, ist in jeder Führungseinrichtung der auf der Führungsschiene 11 bzw. 12 verschiebbare Schiebekörper mit dem auf der Führungsschiene 15 bzw. 16 angeordneten Schiebekörper 17 bzw. 18 schwenkbar verbunden. Die auf den Führungsschienen 11 und 12 angeordneten Schiebekörper tragen Zapfen 13.1 bzw. 14.1, die über Kegelrollenlager 19 bzw. 20 in auf den Schiebekörpern 17 und 18 getragenen Fortsätzen 17.1 bzw. 18.1 gelagert sind.

Die Achsen der Lager 19 und 20 sind natürlich parallel zu den Achsen der Lager 9 und 10, sie verlaufen in einer zur Schneidkante des Messers 4 senkrechten und zur Auflagetischplatte 2 parallelen Richtung.

Man könnte die auf den Führungsschienen 11 und 12 angeordneten Schiebekörper mit den auf den Führungsschienen 15 und 16 angeordneten Schiebekörpern 17 bzw. 18 auch starr verbinden, aber dann müssten entweder die Führungsschienen 11 und 12 mit dem Maschinengestell 1 schwenkbar verbunden sein oder die Führungsschienen 17 und 18 mit dem Messerträger 3 schwenkbar verbunden sein.

Die beschriebene Hubbewegung des Messerträgers 3 kann in üblicher Weise von einer Kurbelstange 21 bewirkt werden, die über einen Zapfen 22 am Messerträger 3 angelenkt ist. Das andere Ende der Kurbelstange 21 ist an einer Kurbel 23 angelenkt, die von einer Antriebseinrichtung 24 (Fig. 1) gedreht wird.

Der Zapfen 22 kann im Messerträger 3 wie in Fig. 3 angedeutet in einer drehbaren Exzenterbüchse 25 gelagert sein, und beim anderen Ende des Messerträgers kann das Kegelrollenlager 9 in einer im Messerträger 3 drehbaren Exzenterbüchse 26 gehalten sein. Durch Drehen der Exzenterbüchsen 25 und 26 kann in der unteren Endlage des Messerträgers 3 die Höhe der Schneidkante des Messers 4 bezüglich der Auflagetischplatte 2 genau eingestellt werden. Stattdessen oder zusätzlich könnte auch die Auflagetischplatte 2 selbst bezüglich des Maschinengestells 1 höhenverstellbar sein.

Anstelle der Antriebseinrichtung mit Kurbel 23 und Kurbelstange 21 kann für das Bewirken der Hubbewegung des Messerträgers 3 natürlich auch eine andere Antriebseinrichtung verwendet werden, z.B. eine hydraulische Antriebseinrichtung.

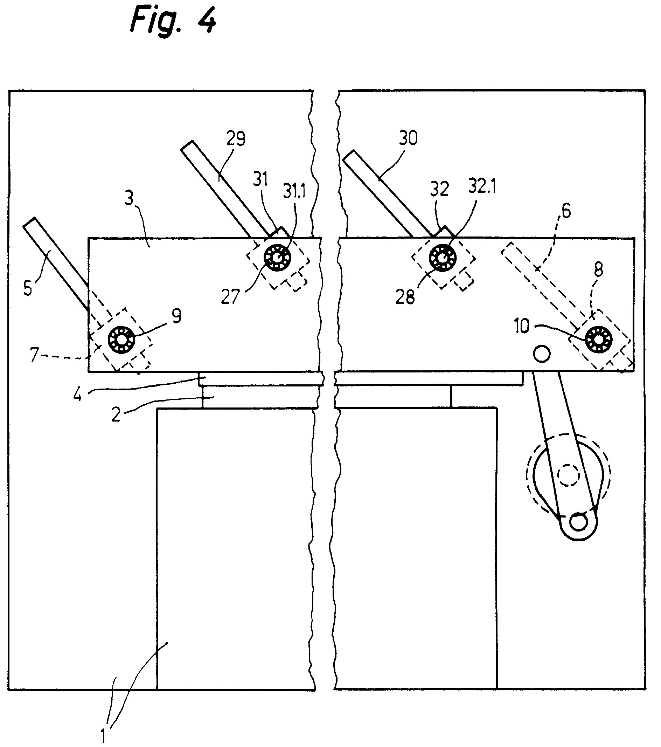

Die Fig. 4 zeigt in einer ähnlichen Ansicht wie Fig. 2 eine abgewandelte Ausführungsform der erfindungsgemässen Schneidmaschine, in der die im Bereich des oberen Randes des Messerträgers 3 angeordneten Führungseinrichtungen nicht die Form von Kreuzschlittenanordnungen haben, sondern einfache Linearführungen kombiniert mit Kegelrollenlagern 27 bzw. 28 sind. Jede dieser Linearführungen besitzt eine am Maschinengestell 1 befestigte Führungsschiene 29 bzw. 30, auf der ein Schiebekörper 31 bzw. 32 verschiebbar geführt ist. Die Schiebekörper 31 und 32 tragen je einen Zapfen 31.1 bzw. 32.1, der über das betreffende Lager 27 bzw. 28 im Messerträger 3 gelagert ist.

Die im Bereich der seitlichen Enden des Messerträgers 3 angeordneten Linearführungen können gleich ausgebildet sein wie in den Fig. 1 bis 3, mit den Führungsschienen 5 und 6, den Schiebekörpern 7 und 8 und den Kegelrollenlagern 9 und 10. Die am Maschinengestell 1 befestigten Führungsschienen 5 und 6 sind wie beschrieben bezüglich der Auflagetischplatte 2 unterschiedlich geneigt. Aehnliches gilt auch für die Führungsschienen 29 und 30. Die Neigung jeder dieser Führungsschienen 29 und 30 ist so gewählt, dass sie der Neigung der Bewegungsbahn des betreffenden Lagers 27 bzw. 28 bei der Durchführung der Hubbewegung des Messerträgers 3 entspricht.

Auch in der Ausführungsform gemäss Fig. 4 könnten natürlich die Schiebekörper 7, 8, 31 und 32 starr mit dem Messerträger 3 verbunden sein und dafür die Führungsschienen 5, 6, 29 und 30 schwenkbar mit dem Maschinengestell 1 verbunden sein.

Dabei ist in jedem Fall klar, dass die Führungsschiene und der Schiebekörper einfach zwei bezüglich einander verschiebbare Elemente jeder Linearführung sind. In der Regel ist eines dieser Elemente langgestreckt und wird in der vorliegenden Beschreibung Führungsschiene genannt. Das andere Element kann kürzer sein und wird hier Schiebekörper genannt. In der Regel wird es zweckmässig sein, das langgestreckte Element jeder Linearführung, also die Führungsschiene, am Maschinengestell 1 oder am Messerträger 3 zu befestigen und das andere Element jeweils über ein Kegelrollenlager schwenkbar mit dem Messerträger 3 bzw. mit dem Maschinengestell 1 zu verbinden.

## Patentansprüche

1. Schneidmaschine mit einem Maschinengestell (1), das eine Auflagetischplatte (2) trägt, und mit einem Messerträger (3), welcher an dem Maschinengestell (1) derart geführt ist, dass ein am Messerträger (3) befestigtes Messer (4) bezüglich der Auflagetischplatte (2) zwischen einer oberen Endlage, in der die Schneidkante des Messers (4) in einem Winkel zur Auflagetischplatte (2) verläuft, und einer unteren Endlage, in der die Schneidkante parallel zur Auflagetischplatte (2) verläuft, bewegbar ist und dabei gleichzeitig in seiner Längsrichtung verschiebbar ist, wobei der Messerträger (3) an zwei Stellen, im Bereich seiner seitlichen Enden, mit geradlinigen Führungseinrichtungen (5,7, 6,8), die bezüglich der Auflagetischplatte (2) unterschiedlich geneigt sind, geführt ist, und der Messerträger (3) gegen Verschiebung in einer zur Schneidkante senkrechten und zur Auflagetischplatte (2) parallelen Richtung gehalten ist, dadurch gekennzeichnet, dass die geradlinigen Führungseinrichtungen Linearführungen (5,7, 6,8) sind, von denen jeweils eines (7, 8) der beiden bezüglich einander verschiebbaren Elemente über ein Wälzlager (9, 10) mit dem Messerträger (3) oder mit dem Maschinengestell (1) schwenkbar verbunden ist und die den Messerträger (3) gegen Verschiebung in der zur Schneidkante senkrechten und zur Auflagetischplatte (2) parallelen Richtung halten, und dass der Messerträger (3) ferner an wenigstens einer dritten Stelle mit einer Führungseinrichtung, die wenigstens eine dritte Linearführung (29,31; 15,17) enthält, geführt und gegen Kippbewegungen um eine durch die beiden erstgenannten Stellen gehende Achse gehalten ist.

2. Schneidmaschine nach Anspruch 1, dadurch gekennzeichnet, dass die genannte Führungseinrichtung im Bereich eines oberen Randes des Messerträgers (3) angeordnet ist.

3. Schneidmaschine nach Anspruch 1 oder 2, dadurch gekennzeichnet, dass die dritte Linearführung (29,31) ein Element (31) aufweist, das mit dem Messer-träger (3) oder mit dem Maschinengestell (1) über ein Wälzlager (27) schwenkbar verbunden ist.

4. Schneidmaschine nach einem der Ansprüche 1 bis 3, dadurch gekennzeichnet, dass die dritte Linearführung (11,13) mit einer weiteren Linearführung (15,17) kombiniert ist, um eine Kreuzschlittenanordnung zu bilden.

5. Schneidmaschine nach Anspruch 4, dadurch gekennzeichnet, dass ein Element (13) der Linearführungen (15,17, 11,13) der Kreuzschlittenanordnung mit einem anderen Element (17) oder mit dem Messerträger (3) oder mit dem Maschinengestell (1) über ein Wälzlager (19) schwenkbar verbunden ist.

6. Schneidmaschine nach einem der Ansprüche 1 bis 5, dadurch gekennzeichnet, dass die Wälzlager vorgespannte Kegelrollenlager sind.

7. Schneidmaschine nach einem der Ansprüche 1 bis 6, dadurch gekennzeichnet, dass die Linearführungen bezüglich einander geneigte Rollenreihen enthalten.

## Claims

1. Cutting machine with a machine frame (1), carrying a supporting table top (2), and with a knife bar (3), guided on the machine frame (1) so that a knife (4) attached to the knife bar (3) can be moved with respect to the supporting table top (2) between an upper end position, in which the cutting edge of the knife (4) runs at an angle to the supporting table top (2), and a lower end position, in which the cutting edge runs parallel to the supporting table top (2), and is simultaneously movable in its longitudinal direction, the knife bar (3) being guided at two points, near its lateral ends, with rectilinear guiding devices (5,7, 6,8), which are at different angles with respect to the supporting table top (2), and the knife bar (3) being secured against displacement in a direction perpendicular to the cutting edge and parallel to the supporting table top (2), characterized in that the rectilinear guiding devices are linear guides (5,7, 6,8), of which one (7, 8) of the two mutually adjustable elements is in each case pivotally connected to the knife bar (3) or to the machine frame (1) via a roller bearing (9, 10), and which secure the knife bar (3) against displacement in the direction perpendicular to the cutting edge and parallel to the supporting table top (2), and in that the knife bar (3) is additionally, at at least a third point, guided and secured against tilting motions about an axis passing through the two first-mentioned points by means of a guiding device which contains at least a third linear guide (29,31; 15,17).

2. Cutting machine according to claim 1, characterized in that the guiding device mentioned is situated in the area of an upper edge of the knife bar (3).

3. Cutting machine according to claim 1 or 2, characterized in that the third linear guide (29,31) includes an element (31) which is pivotally connected to the knife bar (33) or to the machine frame (1) via a roller bearing (27).

4. Cutting machine according to one of claims 1 to 3, characterized in that the third linear guide (11,13) is combined with a further linear guide (15,17) in order to form a cross-slide arrangement.

5. Cutting machine according to claim 4, characterized in that one element (13) of the linear guides (15,17, 11,13) of the cross-slide arrangement is pivotally connected to another element (17) or to the knife bar (3) or to the machine frame (1) via a roller bearing (19).

6. Cutting machine according to one of claims 1 to 5, characterized in that the roller bearings are prestressed tapered roller bearings.

7. Cutting machine according to one of claims 1 to 6, characterized in that the linear guides contain mutually inclined rows of rollers.

## Revendications

1. Machine à couper avec un bâti de machine (1) qui porte un plateau de table d'appui (2), et avec un porte-couteau (3) qui est guidé sur le bâti de machine (1) de telle sorte qu'un couteau (4) fixé au porte-couteau (3) est mobile, par rapport au plateau de table d'appui (2), entre une position extrême supérieure, dans laquelle l'arête de coupe du couteau (4) forme un angle par rapport au plateau de table d'appui (2), et une position extrême inférieure, dans laquelle l'arête de coupe du couteau (4) est parallèle au plateau de table d'appui (2), et en même temps peut se déplacer en sens longitudinal, le porte-couteau (3) étant guidé en deux endroits, dans le domaine de ses extrémités latérales, par des dispositifs de guidage rectilignes (5,7, 6,8), qui sont inclinés différemment par rapport au plateau de table d'appui (2), et le porte-couteau (3) étant retenu contre un déplacement dans une direction perpendiculaire à l'arête de coupe et parallèle au plateau de table d'appui (2), caractérisée par le fait que les dispositifs de guidage rectilignes sont des glissières linéaires (5,7 6,8), dont dans chaque cas l'un (7, 8) des deux éléments mobiles l'un par rapport à l'autre est lié de manière pivotante au porte-couteau (3) ou au bâti de machine (1) par un roulement (9,10), et qui tiennent le porte-couteau (3) contre le déplacement dans la direction perpendiculaire à l'arête de coupe et parallèle au plateau de table d'appui (2), et que le porte-couteau (3) est en outre guidé, et retenu contre des mouvements de basculement autour d'un axe passant par les deux endroits cités en premier, au moins en un troisième endroit par un dispositif de guidage qui contient au moins une troisième glissière linéaire (29,31; 15,17).

2. Machine à couper selon la revendication 1, caractérisée par le fait que le dispositif de guidage cité est disposé dans le domaine d'un bord supérieur du porte-couteau (3).

3. Machine à couper selon la revendication 1 ou 2, caractérisée par le fait que la troisième glissière linéaire (29,31) présente un élément (31) qui est lié de manière pivotante au porte-couteau (3) ou au bâti de machine (1) par un roulement (27).

4. Machine à couper selon une des revendications 1 à 3, caractérisée par le fait que la troisième glissière linéaire (11,13) est combinée avec une autre glissière linéaire (15,17) afin de former une disposition de chariot en croix.

5. Machine à couper selon la revendication 4, caractérisée par le fait qu'un élément (13) des glissières linéaires (15,17; 11,13) de la disposition de chariot en croix est lié de manière pivotante à un autre élément (17) ou au porte-couteau (3) ou au bâti de machine (1) par un roulement (19).

6. Machine à couper selon une des revendications 1 à 5, caractérisée par le fait que les roulements sont des roulements à rouleaux coniques précontraints.

7. Machine à couper selon une des revendications 1 à 6, caractérisée par le fait que les glissières linéaires contiennent des rangées de rouleaux inclinées les unes par rapport aux autres.
